# FASCICULE DE BREVET EUROPEEN

(11) **EP 1 060 780 B1**
(45) Date de publication et mention de la délivrance du brevet: **28.11.2007**
(21) Numéro de dépôt: 00401728.1
(22) Date de dépôt: 16.06.2000
(51) Int. Cl.: B01D 41/04

(54) **Procédé et dispositif de nettoyage d'un filtre à particules**
Verfahren und Vorrichtung zur Reiningung eines Partikelfilters
Process and apparatus for cleaning a particle filter

(30) Priorité: 17.06.1999 FR 9907682
(43) Date de publication de la demande: 20.12.2000
(73) Titulaire: Peugeot Citroen Automobiles SA, 92200 Neuilly sur Seine (FR)
(72) Inventeur: Rigaudeau, Christine, 92800 Puteaux (FR); Lacomblez, Philippe, 91630 Marolles en Hurepoix (FR); Fontaine, Denis, 25700 Mathay (FR)
(74) Mandataire: Bouget, Lucien

(56) Documents cités:
- EP-A- 0 335 240
- DE-A- 4 313 132

## Description

L'invention concerne un procédé et un dispositif de nettoyage d'un filtre à particules et un procédé de traitement d'effluents produits lors du nettoyage.

Les gaz d'échappement des moteurs Diesel qui utilisent du gazole comme carburant renferment à la fois des polluants gazeux tels que des hydrocarbures imbrûlés et des oxydes d'azote ou de carbone et des polluants solides qui sont principalement constitués par des particules de suie. Les normes antipollution appliquées aux moteurs Diesel nécessitent une élimination de plus en plus poussée des émissions de particules de suie dans les gaz d'échappement de ces moteurs.

Afin d'assurer l'élimination des particules de suie, un post-traitement des gaz d'échappement utilisant un filtre à particules est nécessaire.

Un tel filtre à particules est installé dans la ligne d'échappement du moteur et comporte au moins un élément de filtration constitué par un support filtrant à structure poreuse éventuellement associé à un autre élément de dépollution, fixé dans une enveloppe métallique qui est reliée à la ligne d'échappement. Le support filtrant ou les éléments filtrants disposés dans l'enveloppe métallique du filtre, appelée "canning", sont généralement constitués par des éléments en matière céramique poreuse. Le support filtrant est traversé par les gaz d'échappement entre une extrémité d'entrée et une extrémité de sortie du filtre, ce qui permet de retenir les particules solides de suie en suspension dans les gaz d'échappement, afin d'obtenir un gaz épuré en sortie. Le filtre à particules peut être disposé en aval d'un catalyseur.

Au cours du fonctionnement du moteur, le support filtrant se charge de particules de suie qui se déposent à l'intérieur de ses porosités, de sorte que le filtre se colmate progressivement. Le décolmatage du filtre peut être obtenu en faisant brûler les suies déposées dans les porosités du support filtrant, sur la ligne même d'échappement, pendant l'utilisation du véhicule automobile.

Les suies, en présence d'oxygène, brûlent à des températures de l'ordre de 550°C à 600°C. De tels niveaux thermiques ne sont que rarement atteints par les gaz d'échappement d'un moteur Diesel d'un véhicule de tourisme. De ce fait, il est nécessaire de favoriser le début de la régénération des éléments de filtration par ajout dans le carburant d'un additif permettant d'abaisser la température de combustion des suies.

Les additifs sont généralement constitués par des composés organométalliques qui, mélangés dans des proportions déterminées au gazole, suivent le circuit du gazole. Ils sont ainsi injectés dans la chambre de combustion, par le système d'injection et leurs résidus de combustion se retrouvent dans les gaz d'échappement.

La présence de ces additifs dans le filtre à particules où ils sont mélangés intimement avec les particules de suies leur permet de jouer un rôle catalyseur lors de la combustion des particules de suie et d'abaisser les températures d'inflammation des suies aux environs de 350°C à 550°C.

La combustion, éventuellement catalysée, des suies dans le filtre à particules permet d'éliminer les composés organiques et le carbone contenu dans ces suies. Cependant, à l'issue de la régénération du filtre par combustion, il subsiste des résidus minéraux qui sont retenus dans les pores et les canaux de l'élément filtrant. Ces résidus minéraux sont constitués en particulier par des résidus provenant des additifs d'aide à la combustion des suies, d'autres additifs incorporés au gazole ou encore de lubrifiant ; ces résidus peuvent être constitués également par des particules dues à l'usure du moteur ou provenant de l'environnement extérieur, lorsque de telles particules ne sont pas retenues par le filtre à air du moteur. Tous ces résidus restent stockés dans les pores et les canaux de l'élément filtrant du filtre à particules. Du point de vue de la composition chimique, de nombreuses espèces peuvent être présentes dans ces résidus, par exemple des oxydes, des sulfates, des nitrates ou des phosphates d'éléments tels que le cérium, le zinc, le calcium, le cuivre, le fer ou le nickel.

Le filtre à particules s'encrasse progressivement et, après une certaine durée de fonctionnement dans la ligne d'échappement, le colmatage de l'élément filtrant peut être tel qu'il en résulte une détérioration des performances du moteur et une augmentation de la consommation de carburant. Il est nécessaire alors, pour restaurer des conditions de fonctionnement satisfaisantes du filtre, soit de remplacer le filtre par un filtre neuf, soit de nettoyer le filtre.

Du fait du coût élevé des filtres à particules, il peut être intéressant économiquement d'éviter un remplacement du filtre.

On connaît dans le document EP-A-0335 240, un dispositif de nettoyage d'un corps creux contenant un catalyseur, comprenant un moyen de fixation, une buse de formation d'un courant de fluide de nettoyage suivant une direction longitudinale de l'objet à nettoyer et un ensemble de distribution du fluide de nettoyage sous pression de manière à ce que le fluide de nettoyage traverse l'objet à nettoyer dans une direction longitudinale.

On connaît également dans le document DE-A-4313132 un dispositif de nettoyage d'un filtre de particules.

Mais, avec ces dispositifs connus, des gouttelettes de fluide de nettoyage peuvent demeurer dans le filtre à particules après son remontage ce qui peut nuire à son fonctionnement.

Le but de l'invention est donc de proposer un procédé de nettoyage d'un filtre à particules comportant un support filtrant ayant une structure poreuse éventuellement associé à un catalyseur, fixé dans une enveloppe métallique, le filtre étant monté en service dans une ligne d'échappement d'un véhicule automobile de façon à être traversé entre une extrémité d'entrée et une extrémité de sortie, par un courant de gaz d'échappement du moteur du véhicule automobile renfermant des particules de suie dont une partie au moins est retenue par le support filtrant et subit une combustion éventuellement catalysée dans le support filtrant sous l'effet d'un échauffement par les gaz d'échappement, ce qui permet de régénérer le filtre dans la ligne d'échappement, ce procédé de nettoyage permettant d'éviter un remplacement du filtre, lorsque le filtre est encrassé par des résidus minéraux, à l'issue de la régénération par combustion.

Dans ce but, après une durée de fonctionnement du filtre dans la ligne d'échappement telle que le support filtrant du filtre régénéré par combustion se trouve au moins partiellement colmaté par des résidus et que le fonctionnement du filtre soit détérioré :
- on démonte au moins une partie de la ligne d'échappement comportant le filtre à particules régénéré par combustion pour la séparer du véhicule automobile ;et
- on fait passer à travers le support filtrant éventuellement associé à un catalyseur, dans le sens allant de l'extrémité de sortie jusqu'à l'extrémité d'entrée du filtre, au moins un courant de fluide de nettoyage à une pression et à un débit contrôlé de manière à dissocier et à entraîner les résidus retenus dans le support filtrant, pendant une durée de traitement suffisante pour réduire le colmatage du support filtrant jusqu'à permettre à nouveau un fonctionnement satisfaisant du filtre sur la ligne d'échappement, caractérisé en ce qu'on réalise au moins un cycle comportant alternativement, une phase de nettoyage au cours de laquelle on fait passer à travers le support filtrant du filtre un liquide de nettoyage sous pression tel que de l'eau sous pression et une phase d'expulsion et/ou de séchage dans laquelle on fait passer, à travers le support filtrant, un gaz sous pression tel que de l'air comprimé.

L'invention est également relative à un dispositif permettant de mettre en oeuvre le procédé de nettoyage suivant l'invention.

Afin de bien faire comprendre l'invention, on va maintenant décrire, à titre d'exemple, en se référant aux figures jointes en annexe, la mise en oeuvre du procédé suivant l'invention pour réaliser le nettoyage d'un filtre à particules d'un véhicule à moteur Diesel, le dispositif utilisé et un procédé de traitement des effluents de nettoyage.

La figure 1 est une vue schématique d'une installation selon un premier mode de réalisation permettant de mettre en oeuvre le procédé de nettoyage suivant l'invention.

La figure 2 est une vue schématique d'une installation selon un second mode de réalisation permettant de mettre en oeuvre le procédé de l'invention.

Après une certaine durée de fonctionnement d'un véhicule automobile à moteur Diesel comportant une ligne d'échappement sur laquelle est intercalé un filtre à particules, cette durée de fonctionnement pouvant, par exemple, correspondre à une distance parcourue par le véhicule, de l'ordre de 80.000 km, il peut s'avérer nécessaire de réaliser un nettoyage du filtre à particules pour restaurer les performances du moteur et pour limiter la consommation de carburant.

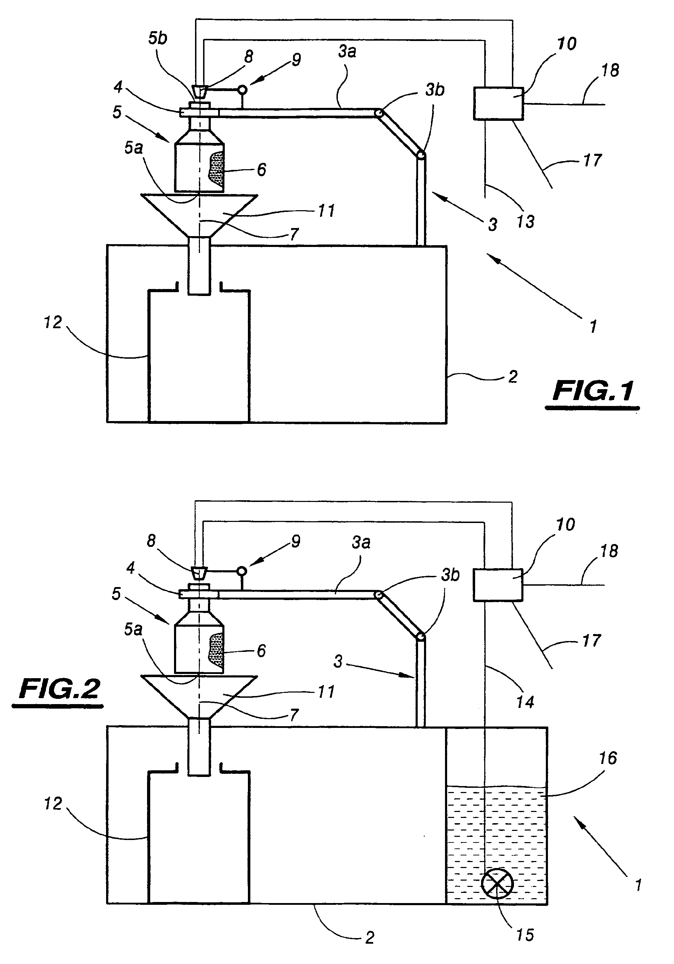

Le nettoyage du filtre à particules peut être effectué dans un service d'entretien d'après-vente ou dans un atelier de réparation dans lequel on dispose de préférence d'une installation de nettoyage telle que représentée sur la figure 1 ou sur la figure 2.

Il est possible également de mettre en oeuvre le procédé suivant l'invention en utilisant une installation différente.

Préalablement à l'opération de nettoyage proprement dite, on s'assure que le filtre a été régénéré par combustion des particules de suie contenues dans le support filtrant. Tous les composés organiques et les structures carbonées contenues dans les suies ont été brûlées mais le support filtrant renferme des résidus minéraux de natures diverses qui obstruent ses pores et ses canaux et entraînent le colmatage du filtre.

Dans un premier temps, on réalise la dépose de tout ou partie de la ligne d'échappement, de manière à séparer du véhicule automobile le filtre à particules ou une partie de la ligne d'échappement comportant au moins le filtre à particules. L'opération de nettoyage qui consiste à éliminer tous les résidus solides qui encrassent le filtre à particules peut être réalisée sur une installation telle que représentée sur la figure 1 ou sur la figure 2.

Les éléments correspondants sur les figures 1 et 2 sont désignés par les mêmes repères et on décrira ci-après la partie commune aux deux installations sans référence particulière à l'une ou l'autre des deux figures.

L'installation de nettoyage désignée de manière générale par le repère 1 comporte un bâti support 2 sur lequel est monté un bras articulé 3 comportant, à son extrémité libre, un élément 4 de maintien d'un filtre à particules 5 dont on effectue le nettoyage, l'élément de maintien 4 étant constitué de préférence par une bride dans laquelle est engagée et fixée une extrémité du filtre à particules 5.

Le bras 3 comporte une colonne sensiblement verticale solidaire du bâti support 2 à laquelle le bras proprement dit 3a à l'extrémité duquel est fixée la bride 4 est monté par l'intermédiaire d'un bras intermédiaire et d'articulations 3b qui peuvent être bloquées de manière à maintenir le bras 3a en position fixe. Le montage articulé du bras 3a sur la colonne solidaire du bâti support 2 permet, grâce aux articulations 3b, de régler la position du bras 3a portant le filtre à particules 5 dans des directions horizontales X et Y perpendiculaires entre elles et dans la direction verticale Z.

Le filtre à particules 5 comporte une enveloppe métallique ou "canning" à l'intérieur de laquelle est logé un support filtrant à structure poreuse par exemple constitué par un élément en matière céramique poreuse associé éventuellement à un autre élément de dépollution.

Le filtre 5 comporte une partie d'entrée, à l'une de ses extrémités longitudinales 5a, et une partie de sortie, à son extrémité longitudinale opposée 5b.

Lorsque le filtre à particules 5 est en service sur la ligne d'échappement du véhicule automobile, les gaz d'échappement entrent dans le filtre à particules par l'extrémité 5a et sortent du filtre par son extrémité opposée 5b.

Le filtre à particules 5 est fixé à l'extrémité du bras 3 de manière que son axe longitudinal 7 soit sensiblement vertical, la partie du filtre comportant l'extrémité de sortie 5b engagée dans la bride 4 étant à la partie supérieure du filtre et l'extrémité d'entrée 5a à sa partie inférieure.

Le bras 3 est conçu de manière que la partie de bras proprement dite 3a portant le filtre 5 supporte une charge de l'ordre de 800 N.

Bien entendu, on peut concevoir une installation de nettoyage où le filtre à particules est disposé avec son axe longitudinal 7 correspondant à la direction générale de circulation des gaz dans le filtre en service, dans une direction différente de la direction verticale.

Le filtre à particules 5 régénéré, qui est monté sur le bras 3 du dispositif de nettoyage 1, est encrassé par des résidus minéraux solides retenus dans les pores du support filtrant 6.

L'opération de nettoyage réalisée par le dispositif 1 vise à éliminer le plus complètement possible les particules solides contenues dans le support filtrant 6 du filtre 5.

Pour cela, une buse ou un jeu de buses 8 est monté par l'intermédiaire d'un support articulé 9 sur le bras 3a, de telle manière que la buse ou le jeu de buses 8 puisse être placé au-dessus de l'extrémité de sortie 5b du filtre et dirigée suivant l'axe longitudinal 7 du filtre 5. Le support 9 peut être déplacé pour régler la position de la buse ou du jeu de buses 8 dans la direction axiale 7, par rapport à l'extrémité de sortie 5b du filtre à particules 5. Dans les parties d'extrémité 5a et 5b du filtre 5, le support filtrant 6 n'est pas recouvert par l'enveloppe de tôle, de manière à permettre le passage des gaz d'échappement lorsque le filtre est monté dans la ligne d'échappement du véhicule automobile, les surfaces d'extrémité du support filtrant 6 étant apparentes à l'entrée et à la sortie du filtre 5.

La buse 8, ou au moins l'une des buses du jeu de buses, peut être alimentée en fluide sous pression, à partir d'un ensemble de distribution 10 comportant des électrovannes et un programmateur permettant de commander les différentes phases du nettoyage.

L'extrémité d'entrée 5a du filtre à particules 5 est disposée au-dessus d'un élément de récupération de liquide 11 ayant la forme d'un entonnoir communiquant avec un bac de récupération 12.

Les dispositifs de nettoyage représentés respectivement sur les figures 1 et 2 ne diffèrent que par les moyens utilisés pour alimenter en eau l'ensemble de distribution 10 de fluide à la buse ou au jeu de buses 8 de nettoyage du filtre.

Dans le cas du dispositif représenté sur la figure 1, l'ensemble de distribution 10 est alimenté en eau sous pression par une conduite 13 reliée à une source d'eau sous pression indépendante de l'installation de nettoyage.

Dans le cas du dispositif de nettoyage représenté sur la figure 2, l'ensemble de distribution 10 est alimenté en eau sous pression par l'intermédiaire d'une conduite 14 reliée à une pompe ou à un surpresseur 15 qui peut être immergé (ou non) dans un bac d'alimentation 16 fixé sur le châssis support 2 du dispositif de nettoyage 1.

Comme il sera expliqué plus loin, l'eau d'alimentation récupérée dans le bac d'alimentation 16 est de l'eau obtenue par épuration du liquide de nettoyage récupéré dans le bac de récupération 12.

De plus, l'ensemble d'alimentation dans le cas du dispositif de nettoyage représenté sur la figure 1, comme dans le cas du dispositif de nettoyage représenté sur la figure 2, est alimenté en air comprimé par une conduite 17 et en courant électrique de commande des électrovannes par une ligne 18.

Dans tous les cas, le nettoyage du filtre 5 est réalisé en alimentant la buse ou le jeu de buses 8 en fluide sous pression, à partir de l'ensemble 10. Le fluide sous pression est dirigé sur une surface de l'élément filtrant 6, à l'extrémité de sortie 5b du filtre 5, de manière que le courant de fluide sous pression traverse le support filtrant 6 du filtre, dans une direction globalement parallèle à l'axe longitudinal 7 du filtre.

De préférence, on effectue le nettoyage du filtre en envoyant successivement, par des buses de nettoyage du jeu de buses 8, un liquide de nettoyage et, par des buses de séchage et d'expulsion du jeu de buses 8, un gaz sous pression tel que de l'air comprimé, l'alimentation des buses par l'intermédiaire des électrovannes de l'ensemble de distribution 10 étant commandée par le programmateur.

On peut prévoir la possibilité de former, à l'aide des buses, des jets pulsés de liquide de nettoyage et/ou de gaz sous pression, à des fréquences fixes ou variables qui sont envoyés à travers le support filtrant 6.

Le liquide de nettoyage, constitué par de l'eau ou une solution chimique non agressive vis-à-vis du support filtrant et des composants de la ligne d'échappement, est envoyé sous pression sur la face de sortie du filtre, de manière que le liquide de nettoyage circulant de manière générale dans la direction de l'axe 7 du filtre puisse pénétrer dans les pores du support filtrant pour venir en contact avec les résidus solides retenus par les pores du support filtrant. A l'intérieur des pores, au contact des résidus, le liquide de nettoyage détruit les composés constituant les résidus par action chimique et/ou assure la dissolution ou la mise en suspension de ces résidus.

La pression du courant de nettoyage doit être contrôlée et régulée, afin d'éviter de dégrader le support filtrant ou de produire le déplacement du support filtrant à l'intérieur de son enveloppe métallique. D'autre part, la pression du liquide de nettoyage généralement constitué par de l'eau doit être suffisante pour que le courant de liquide de nettoyage pénètre dans tout le volume du support filtrant. De préférence, la pression du courant de liquide de nettoyage est comprise entre 1 et 100 bars et la surface d'impact du jet de nettoyage sur l'extrémité de sortie du filtre est d'environ 1 cm².

Les buses du jeu de buses 8 sont réalisées de manière à permettre un balayage régulier de la surface de l'extrémité de sortie du filtre 5 qui constitue la face d'entrée lors de l'opération de nettoyage, le liquide de nettoyage (ou le gaz d'expulsion et de séchage) circulant de l'extrémité de sortie vers l'extrémité d'entrée du filtre, c'est-à-dire dans le sens inverse de la circulation des gaz d'échappement dans le filtre en position de service dans la ligne d'échappement du véhicule automobile.

Le débit de liquide de nettoyage tel que de l'eau est généralement compris entre 1 et 50 litres par minute suivant la taille et les caractéristiques du filtre à particules.

La température du liquide de nettoyage dans le cas où ce liquide est de l'eau peut aller de la température ambiante, par exemple 20°C, à une température où l'eau est sous forme de vapeur.

Lorsqu'on a effectué une phase de nettoyage par injection de liquide de nettoyage dans le support filtrant du filtre 5, on réalise à la suite une phase d'expulsion et de séchage en alimentant les buses d'expulsion et de séchage en un gaz sous pression qui est généralement de l'air comprimé ou éventuellement un autre gaz propre non toxique.

Comme dans le cas du nettoyage, on réalise un balayage régulier de la surface d'extrémité du filtre avec le jet de gaz sous pression.

Pendant la phase de nettoyage et pendant la phase d'expulsion et de séchage, le balayage peut être réalisé en utilisant une ou plusieurs buses rotatives autour d'un axe parallèle à l'axe longitudinal du filtre et inclinées par rapport à cet axe longitudinal.

Le flux de gaz sous pression, par exemple de l'air comprimé, pénètre dans le support filtrant poreux 6 et produit l'expulsion des résidus solides qui ont été mis en solution ou en suspension dans l'eau de nettoyage, pendant la phase précédente de nettoyage.

La succession d'une phase de nettoyage et d'une phase d'expulsion et de rinçage par un gaz sous pression constitue un cycle du procédé de nettoyage.

La durée des phases successives de nettoyage par un liquide et d'expulsion et de séchage par un gaz est réglée de manière à obtenir un effet de nettoyage optimal.

La durée d'application du courant de liquide de nettoyage est optimisée, de manière à permettre une action chimique du liquide de nettoyage sur les substances constituant les résidus et une action mécanique du fait de la pression du liquide de nettoyage, tout en évitant le remplissage du filtre et le débordement du liquide de nettoyage tel que de l'eau par l'extrémité de sortie du filtre.

La durée d'application du courant de nettoyage est comprise entre une et quelques minutes.

La durée d'application du courant gazeux d'expulsion des substances dissoutes ou en solution peut aller de quelques secondes à quelques minutes et cette application peut être fractionnée en plusieurs phases successives ou réalisées de manière intermittente.

Le cycle comportant successivement une phase de nettoyage et une phase d'expulsion et de rinçage doit être répété un nombre de fois suffisant pour permettre une extraction totale ou pratiquement totale des résidus solides présents dans le filtre à particules.

A la fin de chacun des cycles ou après un nombre de cycles déterminé, on mesure la perte de charge induite par le filtre à particules, par exemple sur le flux de gaz d'expulsion et de rinçage ou sur un flux de gaz susceptible de simuler un flux de gaz d'échappement dans le filtre.

Lorsque la perte de charge induite par le filtre à particules a atteint ou se trouve très proche de la perte de charge du filtre à l'état neuf, on arrête l'opération de nettoyage réalisée par cycles successifs.

Généralement un très bon nettoyage d'un filtre à particules colmaté par une utilisation sur un véhicule automobile ayant effectué un kilométrage de l'ordre de 80.000 km peut être réalisé en effectuant environ une trentaine de cycles de nettoyage et de séchage successifs.

Le dernier flux de gaz sous pression à la fin du dernier cycle de nettoyage doit être prolongé de manière suffisante pour éliminer un maximum d'eau ou de liquide de nettoyage et peut être réalisé avec un courant gazeux chaud, par exemple par de l'air comprimé à une température comprise entre une température ambiante par exemple 20°C, et la température maximale que peut supporter le matériau filtrant.

Pendant la phase de nettoyage et pendant la phase d'expulsion et de rinçage, on récupère dans le réservoir 12, par l'intermédiaire du dispositif de récupération 11, un effluent constitué par du liquide de nettoyage contenant en solution et/ou en suspension des substances de natures chimiques variées provenant des résidus qui ont été détruits, dissous ou arrachés par le liquide de nettoyage et le gaz d'expulsion et de séchage, à l'intérieur du support filtrant 6.

L'effluent de nettoyage qui est fortement chargé en éléments minéraux ne peut pas être rejeté dans l'environnement et doit donc être soigneusement récupéré à l'extrémité d'entrée du filtre par laquelle est expulsé l'ef fluent.

L'opération de nettoyage par réalisation de cycles successifs est commandée de manière totalement automatique par le programmateur de l'ensemble de distribution 10 relié au jeu de buses 8. L'utilisateur du dispositif de nettoyage n'a pour tâche que de contrôler l'élimination des résidus dans le filtre, par exemple par les mesures de perte de charge.

En fin d'opération, le filtre à particules 5 ou la partie de la ligne d'échappement comportant le filtre à particules 5 est séparé du dispositif de nettoyage et remonté sur le véhicule.

Préalablement à son montage sur le véhicule, le filtre ou la partie de ligne d'échappement comportant le filtre peut être passé dans une étuve ou soumis à un courant gazeux chaud pour parfaire le séchage du support filtrant poreux du filtre à particules.

Lorsqu'on remet le véhicule en marche, après remontage du filtre à particules ou de la partie de ligne d'échappement, il est recommandé de laisser quelque temps le moteur tourner à bas régime pour produire un débit faible de gaz d'échappement. On peut ainsi éliminer totalement l'eau éventuellement présente dans les porosités du filtre à particules sans risquer de détériorer le fonctionnement du moteur par une contre-pression trop importante dans la ligne d'échappement.

Comme indiqué plus haut, l'effluent de nettoyage récupéré dans le bac de récupération 12 ne doit pas être rejeté dans l'environnement, du fait de sa nocivité. En effet, les effluents renferment des proportions qui peuvent être importantes d'espèces chimiques, telles que des oxydes, des sulfates, des phosphates ou des nitrates de métaux tels que le cérium, le zinc, le calcium, le cuivre, le fer ou le nickel. Ces espèces chimiques peuvent présenter des dangers pour l'environnement. En outre, l'effluent présente généralement un pH acide, ce qui interdit également son rejet dans l'environnement sans retraitement.

Il est donc nécessaire de prévoir un procédé de retraitement permettant de séparer de l'effluent, généralement constitué par une solution aqueuse, les composés minéraux qu'il contient et de ramener son pH à une valeur sensiblement neutre.

L'effluent récupéré dans le bac de récupération 12 est donc traité, dans un premier temps, par addition d'un composé basifiant ou tampon à un pH neutre ou légèrement basique qui a pour effet, d'une part, de précipiter les éléments minéraux contenus en solution dans l'effluent et, d'autre part, de ramener le pH de la solution aqueuse de l'effluent à une valeur sensiblement neutre.

On réalise ensuite une séparation par décantation, filtration, centrifugation ou tout autre technique de séparation d'un liquide et d'un solide pour obtenir de l'eau (ou une solution neutre) qui a été épurée, c'est-à-dire séparée des composés minéraux. Cette solution peut être rejetée à l'égout ou réutilisée pour effectuer une nouvelle opération de nettoyage de filtre à particules. On obtient d'autre part un gâteau sensiblement solide ou pâteux renfermant les composés minéraux, ce gâteau solide ou pâteux devant être traité comme un déchet industriel. L'utilisateur peut confier cette partie solide séparée de l'effluent à une société spécialisée dans le traitement et l'élimination des déchets chimiques.

Les volumes récupérés sont évidemment considérablement plus faibles que les volumes d'effluents récupérés dans le bac de récupération 12.

On peut utiliser tout type de composés basifiant ou solution tampon pour ramener le pH de l'effluent à une valeur neutre ou légèrement basique.

Dans le cas où l'on utilise un dispositif de nettoyage tel que représenté sur la figure 2, l'eau épurée séparée des composés minéraux par l'opération de retraitement peut être introduite dans le bac d'alimentation 16 dans lequel la pompe ou le surpresseur 15 assure un prélèvement et une mise en pression de l'eau qui est envoyée à l'ensemble de distribution 10.

Le procédé suivant l'invention permet donc d'assurer de manière rapide et automatique le nettoyage de filtres à particules de véhicules Diesel, après démontage du filtre ou d'une partie de la ligne d'échappement comportant le filtre, le filtre ayant été préalablement régénéré par combustion des suies. Après nettoyage, le filtre totalement régénéré peut être replacé dans la ligne d'échappement du véhicule automobile.

L'invention ne se limite pas strictement au mode de réalisation qui a été décrit.

Les différentes phases de nettoyage avec un liquide et d'expulsion et de séchage par un gaz peuvent être réalisées suivant une séquence différente de celle qui a été décrite.

De manière générale, on met en oeuvre au moins un cycle opératoire comportant alternativement une phase de nettoyage par un liquide et une phase d'expulsion et/ou de séchage par un gaz tel que de l'air comprimé. La phase d'expulsion par un gaz peut être réalisée après ou avant la phase de nettoyage par un liquide au cours du ou des cycles.

Dans certains cas, on pourrait utiliser un seul fluide de nettoyage et d'expulsion, par exemple sous la forme d'une vapeur ou d'un mélange de gaz et de liquide.

La nature chimique des liquides de nettoyage et des gaz d'expulsion et de séchage utilisés peut être choisie de manière variée en fonction de la nature et des caractéristiques des filtres à particules.

Dans certains cas, la phase finale de séchage du filtre peut être réalisée en utilisant un gaz de séchage ou sans utiliser de gaz de séchage, à l'intérieur d'une étuve, à une température relativement élevée pouvant aller jusqu'à la température maximale que peut supporter le matériau filtrant.

On peut également effectuer le séchage du filtre dans un courant d'air chaud produit par un dispositif de chauffage et de séchage analogue à un sèche-cheveux de grande puissance.

Dans le cas où le filtre à particules est associé à un catalyseur disposé en amont du filtre à particules, le catalyseur peut être nettoyé simultanément au support filtrant du filtre à particules, en particulier lorsque le catalyseur et le support filtrant se trouvent dans une enveloppe métallique commune.

Le procédé et le dispositif suivant l'invention peuvent être utilisés pour le nettoyage de tout filtre à particules de véhicules à moteur Diesel.

## Revendications

1. Procédé de nettoyage d'un filtre à particules (5) comportant un support filtrant (6) ayant une structure poreuse éventuellement associé à un catalyseur, fixé dans une enveloppe métallique, le filtre étant monté en service dans une ligne d'échappement d'un véhicule automobile de façon à être traversé entre une extrémité d'entrée (5a) et une extrémité de sortie (5b) par un courant de gaz d'échappement du moteur du véhicule automobile renfermant des particules de suie dont une partie au moins qui est retenue par le support filtrant (6) subit une combustion éventuellement catalysée dans le support filtrant (6), sous l'effet d'un échauffement par les gaz d'échappement du moteur, pour régénérer le filtre dans la ligne d'échappement, après une durée de fonctionnement du filtre dans la ligne d'échappement telle que le support filtrant (6) du filtre (5) régénéré par combustion se trouve au moins partiellement colmaté par des résidus minéraux et que le fonctionnement du filtre soit détérioré :
- on démonte au moins une partie de la ligne d'échappement comportant le filtre à particules (5) régénéré par combustion pour la séparer du véhicule automobile, et
- on fait passer à travers le support filtrant (6) éventuellement associé à un catalyseur dans un sens allant de l'extrémité de sortie (5b) jusqu'à l'extrémité d'entrée (5a) du filtre (5) au moins un courant de fluide de nettoyage à une pression et un débit contrôlés, de manière à dissocier et à entraîner les résidus retenus dans le support filtrant (6), pendant une durée de traitement suffisante pour réduire le colmatage du filtre, jusqu'à permettre à nouveau un fonctionnement satisfaisant du filtre (5) sur la ligne d'échappement du véhicule automobile, **caractérisé par le fait qu'**on réalise au moins un cycle comportant, alternativement, une phase de nettoyage au cours de laquelle on fait passer à travers le support filtrant (6) du filtre (5) un liquide de nettoyage sous pression tel que de l'eau sous pression et une phase d'expulsion et/ou de séchage dans laquelle on fait passer, à travers le support filtrant (6), un gaz sous pression tel que de l'air comprimé.

2. Procédé suivant la revendication 1, **caractérisé par le fait qu'**on fait passer le liquide de nettoyage et/ou le gaz sous pression à travers le support filtrant (6) sous la forme de jets pulsés, à des fréquences fixes ou variables.

3. Procédé suivant l'une quelconque des revendications 1 et 2, **caractérisé par le fait qu'**on effectue successivement une pluralité de cycles et, par exemple, environ une trentaine de cycles pour réaliser le nettoyage du filtre à particules (5).

4. Procédé suivant l'une quelconque des revendications 1 à 3, **caractérisé par le fait que** la durée de la phase de nettoyage du cycle est comprise entre une et quelques minutes et la durée de la phase d'expulsion et de séchage par un gaz sous pression comprise entre quelques secondes et quelques minutes.

5. Procédé suivant l'une quelconque des revendications 1 à 4, **caractérisé par le fait que** le liquide de nettoyage est de l'eau à une pression comprise entre 1 et 100 bars qui est appliquée sur une zone d'une partie d'extrémité du filtre à particules (5) d'une surface d'environ 1 cm².

6. Procédé suivant la revendication 5, **caractérisé par le fait qu'**on réalise un balayage de la partie d'extrémité du filtre à particules (5), pendant la phase de nettoyage et pendant la phase d'expulsion et de séchage.

7. Procédé suivant l'une quelconque des revendications 1 à 6, **caractérisé par le fait qu'**on réalise une phase finale de séchage du filtre à particules en utilisant un gaz de séchage sous pression à une température pouvant aller jusqu'à la température maximale que peut supporter le matériau du support filtrant (6).

8. Procédé suivant l'une quelconque des revendications 1 à 6, **caractérisé par le fait qu'**on réalise un séchage final du filtre à particules à l'intérieur d'une étuve ou dans un flux d'air chaud.

9. Procédé suivant l'une quelconque des revendications 1 à 8, **caractérisé par le fait qu'**on réalise simultanément le nettoyage du support filtrant (6) du filtre à particules et d'un catalyseur associé au filtre à particules.

10. Dispositif de nettoyage d'un filtre à particules (5) comportant un support filtrant (6) ayant une structure poreuse, fixé dans une enveloppe métallique, le filtre étant monté en service dans une ligne d'échappement d'un véhicule automobile de façon à être traversé entre une extrémité d'entrée (5a) et une extrémité de sortie (5b) par un courant de gaz d'échappement du moteur du véhicule automobile renfermant des particules de suie dont une partie au moins qui est retenue par le support filtrant (6) subit une combustion éventuellement catalysée dans le support filtrant (6), sous l'effet d'un échauffement par les gaz d'échappement du moteur, pour régénérer le filtre dans la ligne d'échappement, **caractérisé par le fait qu'**il comporte un moyen (3, 4) de fixation du filtre à particules dans une position de nettoyage, au moins une buse (8) de formation d'un courant de fluide de nettoyage fixée dans une position alignée suivant une direction longitudinale (7) du filtre à particules (5) en vis-à-vis de l'extrémité de sortie (5b) du filtre à particules (5) et un ensemble de distribution (10) d'au moins un fluide de nettoyage sous pression relié à la buse (8), de manière que la buse (8) alimentée en fluide de nettoyage sous pression fasse passer le fluide de nettoyage sous pression à travers l'élément filtrant (6) du filtre à particules (5), dans la direction longitudinale, entre l'extrémité de sortie (5b) et l'extrémité d'entrée (5a) du filtre à particules, l'ensemble de distribution (10) de fluide de nettoyage comportant des électrovannes et un programmateur des électrovannes pour assurer la distribution dans un jeu de buses (8) relié à l'ensemble de distribution (10) d'un liquide de nettoyage et d'un gaz d'expulsion et de rinçage amené par des conduites d'alimentation (13, 17) de l'ensemble de distribution (10).

11. Dispositif suivant la revendication 10, **caractérisé par le fait qu'**il comporte de plus un bac (12) de récupération d'un effluent constitué par le fluide de nettoyage contenant des résidus sous la forme de composés minéraux à l'état dissous ou en suspension, le bac de récupération (12) étant associé à un dispositif de récupération d'effluents (11) par l'extrémité d'entrée (5a) du filtre à particules (5).

12. Dispositif suivant la revendication 10 ou 11, **caractérisé par le fait qu'**il comporte de plus un bac (16) d'alimentation en liquide de nettoyage et un dispositif d'alimentation (15) tel qu'une pompe ou un surpresseur, pour l'alimentation en liquide de nettoyage tel que de l'eau, de l'ensemble de distribution (10).

13. Dispositif suivant l'une quelconque des revendications 10 à 12, **caractérisé par le fait que** le jeu de buses (8) est monté rotatif autour d'un axe sensiblement parallèle à l'axe longitudinal du filtre (5), pour réaliser un balayage de l'extrémité de sortie (5b) du filtre à particules (5) avec le fluide de nettoyage.

14. Procédé selon la revendication 1, dans lequel le liquide de nettoyage utilisé dans un procédé selon l'une quelconque des revendications 1 à 10, récupéré à l'extrémité d'entrée (5a) du filtre à particules (5) et contenant des résidus constitués par des composés minéraux, à l'état dissous ou en suspension, **caractérisé par le fait qu'**on neutralise l'effluent à l'aide d'un composé basifiant ou tampon à pH neutre ou légèrement basique, de manière à faire précipiter les composés minéraux en solution dans l'effluent et qu'on réalise une séparation des composés minéraux en suspension ou précipités, pour obtenir une solution liquide épurée.

15. Procédé selon la revendication 14, **caractérisé par le fait que** la solution liquide épurée est une solution aqueuse ou de l'eau et qu'on la réutilise comme liquide de nettoyage dans le procédé de nettoyage selon l'une quelconque des revendication 1 à 9.

## Claims

1. Process for cleaning a particle filter (5) comprising a filter support (6) having a porous structure and possibly associated with a catalyst secured in a metal casing, said filter being installed in an exhaust system of a motor vehicle, so that an exhaust gas flow of the motor vehicle engine passes through it between an inlet end (5a) and an outlet end (5b), said exhaust gas containing soot particles, of which at least a portion that is retained by the filter support (6) undergoes combustion possibly catalysed in the filter support (6) under the effect of heating by the engine exhaust gases in order to regenerate the filter in the exhaust system after the filter has been operating in the exhaust system for such a period that the filter support (6) of the filter (5) regenerated by combustion is at least partially clogged by mineral residues and that the operation of the filter has deteriorated:
• at least a portion of the exhaust system comprising the particle filter (5) regenerated by combustion is disassembled to separate it from the motor vehicle, and
• at least one flow of cleaning fluid is passed at a controlled pressure and flow rate through the filter support (6) possibly associated with a catalyst in a direction extending from the outlet end (5b) to the inlet end (5a) of the filter (5) in order to detach and entrain residues retained in the filter support (6) for a treatment period that is sufficient to reduce the clogging of the filter until satisfactory operation of the filter (5) in the exhaust system of the motor vehicle is enabled once again,
**characterised in that** at least one cycle is conducted comprising in turn a cleaning phase, during which a pressurised cleaning liquid such as pressurised water is passed through the filter support (6) of the filter (5), and a scavenging and/or drying phase, in which a pressurised gas such as compressed air is passed through the filter support (6).

2. Process according to Claim 1, **characterised in that** the cleaning liquid and/or the pressurised gas is passed through the filter support (6) in the form of pulsed jets at fixed or variable frequencies.

3. Process according to any one of Claims 1 and 2, **characterised in that** a plurality of cycles are conducted in succession and, for example, about thirty cycles are conducted to clean the particle filter (5).

4. Process according to any one of Claims 1 to 3, **characterised in that** the duration of the cleaning phase of the cycle lies in the range of between one and a few minutes and the duration of the scavenging and drying phase using a pressurised gas lies in the range of between a few seconds and a few minutes.

5. Process according to any one of Claims 1 to 4, **characterised in that** the cleaning liquid is water at a pressure in the range of between 1 and 100 bar, which is applied to a zone of an end section of the particle filter (5) with a surface area of about 1 cm².

6. Process according to Claim 5, **characterised** that the end section of the particle filter (5) is scavenged during the cleaning phase and during the scavenging and drying phase.

7. Process according to any one of Claims I to 6, **characterised in that** a final drying phase of the particle filter is conducted by using a pressurised drying gas at a temperature that can go to the maximum temperature that the material of the filter support (6) can withstand.

8. Process according to any one of Claims 1 to 6, **characterised in that** a final drying of the particle filter is conducted inside a drying oven or in a hot air flow.

9. Process according to any one of Claims 1 to 8, **characterised in that** the cleaning of the filter support (6) of the particle filter and of a catalyst associated with the particle filter is conducted simultaneously.

10. Apparatus for cleaning a particle filter (5) comprising a filter support (6) having a porous structure secured in a metal casing, said filter being installed in an exhaust system of a motor vehicle, so that an exhaust gas flow of the motor vehicle engine passes through it between an inlet end (5a) and an outlet end (5b), said exhaust gas containing soot particles, of which at least a portion that is retained by the filter support (6) undergoes combustion possibly catalysed in the filter support (6) under the effect of heating by the engine exhaust gases in order to regenerate the filter in the exhaust system, **characterised in that** it comprises a means (3, 4) for securing the particle filter in a cleaning position, at least one nozzle (8) for forming a flow of cleaning fluid secured in a position oriented in a longitudinal direction (7) of the particle filter (5) facing the outlet end (5b) of the particle filter (5) and an assembly (10) for distributing at least one pressurised cleaning fluid connected to the nozzle (8), so that the nozzle (8) supplied with pressurised cleaning fluid causes the pressurised cleaning fluid to pass through the filter element (6) of the particle filter (5) in the longitudinal direction between the outlet end (5b) and the inlet end (5a) of the particle filter, said assembly (10) for distributing cleaning fluid comprising solenoid valves and a solenoid timer to ensure distribution in a set of nozzles (8) connected to the assembly (10) for distributing a cleaning liquid and a scavenging and flushing gas delivered through supply conduits (13, 17) of the distribution assembly (10).

11. Apparatus according to Claim 10, **characterised in that** it additionally comprises a recovery tank (12) for an effluent formed by the cleaning fluid containing residues in the form of mineral compounds in dissolved state or in suspension, said recovery tank (12) being connected to an assembly (11) for recovering effluent through the inlet end (5a) of the particle filter (5).

12. Apparatus according to Claim 10 or 11, **characterised in that** it additionally comprises a supply tank (16) for cleaning liquid and a feed device (15) such as a pump or blower for the supply of cleaning liquid such as water to the distribution assembly (10).

13. Apparatus according to any one of Claims 10 to 12, **characterised in that** the set of nozzles (8) is mounted to be rotatable around an axis essentially parallel to the longitudinal axis of the filter (5) to conduct a scavenging operation on the outlet end (5b) of the particle filter (5) using the cleaning fluid.

14. Process according to Claim 1, in which the cleaning liquid used in a process according to any one of Claims 1 to 10 is? recovered at the inlet end (5a) of the particle filter (5) and containing residues formed by mineral compounds in dissolved state or in suspension, **characterised in that** the effluent is neutralised by means of a basifying or buffer compound with a neutral or slightly alkaline pH in order to precipitate the mineral compounds in solution in the effluent, and **in that** the suspended or precipitated mineral compounds are separated to obtain a purified liquid solution.

15. Process according to Claim 14, **characterised in that** the purified liquid solution is an aqueous solution or water, and **in that** this is reused as cleaning liquid in the cleaning process according to any one of Claims 1 to 9.

## Patentansprüche

1. Verfahren zur Reinigung eines Partikelfilters (5) mit einem Filterträger (6) mit einer porösen Struktur, der eventuell zu einem Katalysator gehört, welcher in einem Metallmantel befestigt ist, wobei der Filter im Betrieb in einer Auspuffleitung eines Kraftfahrzeugs so montiert ist, dass er zwischen einem Eingangsende (5a) und einem Ausgangsende (5b) von einem Abgasstrom des Motors des Kraftfahrzeugs durchströmt wird, der Rußpartikel enthält und von dem zumindest ein Teil, der vom Filterträger (6) zurückgehalten wird, eine eventuell katalysierte Verbrennung im Filterträger (6) unter der Wirkung einer Erhitzung durch die Abgase des Motors erfährt, um den Filter in der Auspuffleitung nach einer derartigen Betriebsdauer des Filters in der Auspuffleitung zu regenerieren, dass der Filterträger (6) des Filters (5), der durch Verbrennung regeneriert wird, zumindest teilweise durch Mineralrückstände verstopft ist und die Funktion des Filters verschlechtert ist:
- zumindest ein Teil der Auspuffleitung mit dem Partikelfilter (5), der durch Verbrennung regeneriert wird, demontiert wird, um sie vom Kraftfahrzeug zu trennen, und
- durch den Filterträger (6), der eventuell zu einem Katalysator gehört, in einer Richtung, die vom Ausgangsende (5b) bis zum Eingangsende (5a) des Filters (5) verläuft, mindestens ein Reinigungsfluidstrom mit gesteuertem Druck und gesteuerter Durchflussmenge strömen lassen wird, um die im Filterträger (6) zurückgehaltenen Rückstände zu dissoziieren und mitzunehmen, während einer Behandlungsdauer, die ausreicht, um die Verstopfung des Filters zu verringern, bis erneut eine zufrieden stellende Funktion des Filters (5) in der Auspuffleitung des Kraftfahrzeugs ermöglicht wird, **dadurch gekennzeichnet, dass** mindestens ein Zyklus ausgeführt wird, der abwechselnd eine Reinigungsphase, in deren Verlauf durch den Filterträger (6) des Filters (5) eine Reinigungsflüssigkeit unter Druck wie Wasser unter Druck strömen lassen wird, und eine Austriebs- und/oder Trocknungsphase, in der durch den Filterträger (6) ein Gas unter Druck wie Druckluft strömen lassen wird, umfasst.

2. Verfahren nach Anspruch 1, **dadurch gekennzeichnet, dass** die Reinigungsflüssigkeit und/oder des Gas unter Druck durch den Filterträger (6) in Form von impulsförmigen Strahlen mit festen oder variablen Frequenzen strömen lassen wird.

3. Verfahren nach einem der Ansprüche 1 und 2, **dadurch gekennzeichnet, dass** nacheinander eine Vielzahl von Zyklen und beispielsweise ungefähr dreißig Zyklen durchgeführt werden, um die Reinigung des Partikelfilters (5) zu verwirklichen.

4. Verfahren nach einem der Ansprüche 1 bis 3, **dadurch gekennzeichnet, dass** die Dauer der Reinigungsphase des Zyklus zwischen einer und einigen Minuten liegt und die Dauer der Austriebs- und Trocknungsphase durch ein Gas unter Druck zwischen einigen Sekunden und einigen Minuten liegt.

5. Verfahren nach einem der Ansprüche 1 bis 4, **dadurch gekennzeichnet, dass** die Reinigungsflüssigkeit Wasser mit einem Druck zwischen 1 und 100 bar ist, das auf eine Zone eines Endteils des Partikelfilters (5) mit einer Oberfläche von ungefähr 1 cm² aufgebracht wird.

6. Verfahren nach Anspruch 5, **dadurch gekennzeichnet, dass** eine Spülung des Endteils des Partikelfilters (5) während der Reinigungsphase und während der Austriebs- und Trocknungsphase ausgeführt wird.

7. Verfahren nach einem der Ansprüche 1 bis 6, **dadurch gekennzeichnet, dass** eine Endtrocknungsphase des Partikelfilters unter Verwendung eines Trocknungsgases unter Druck bei einer Temperatur ausgeführt wird, die bis zur maximalen Temperatur gehen kann, die das Material des Filterträgers (6) aushalten kann.

8. Verfahren nach einem der Ansprüche 1 bis 6, **dadurch gekennzeichnet, dass** eine Endtrocknung des Partikelfilters im Inneren eines Trockenofens oder in einem Heißluftstrom ausgeführt wird.

9. Verfahren nach einem der Ansprüche 1 bis 8, **dadurch gekennzeichnet, dass** gleichzeitig die Reinigung des Filterträgers (6) des Partikelfilters und eines zum Partikelfilter gehörenden Katalysators ausgeführt wird.

10. Vorrichtung zur Reinigung eines Partikelfilters (5) mit einem Filterträger (6) mit einer porösen Struktur, der in einem Metallmantel befestigt ist, wobei der Filter im Betrieb in einer Auspuffleitung eines Kraftfahrzeugs so montiert ist, dass er zwischen einem Eingangsende (5a) und einem Ausgangsende (5b) von einem Abgasstrom des Motors des Kraftfahrzeugs durchströmt wird, der Rußpartikel enthält und von dem zumindest ein Teil, der durch den Filterträger (6) zurückgehalten wird, eine eventuell katalysierte Verbrennung im Filterträger (6) unter der Wirkung einer Erhitzung durch die Abgase des Motors erfährt, um den Filter in der Auspuffleitung zu regenerieren, **dadurch gekennzeichnet, dass** sie ein Mittel (3, 4) zur Befestigung des Partikelfilters in einer Reinigungsposition, mindestens eine Düse (8) zum Bilden eines Reinigungsfluidstroms, die in einer Position befestigt ist, die entlang einer Längsrichtung (7) des Partikelfilters (5) gegenüber dem Ausgangsende (5b) des Partikelfilters (5) befestigt ist, und eine Verteilungsbaugruppe (10) für mindestens ein Reinigungsfluid unter Druck, die mit der Düse (8) verbunden ist, so dass die Düse (8), die mit Reinigungsfluid unter Druck versorgt wird, das Reinigungsfluid unter Druck durch das Filterelement (6) des Partikelfilters (5) in der Längsrichtung zwischen dem Ausgangsende (5b) und dem Eingangsende (5a) des Partikelfilters strömen lässt, umfasst, wobei die Verteilungsbaugruppe (10) für das Reinigungsfluid Elektroventile und ein Programmsteuergerät für die Elektroventile umfasst, um die Verteilung einer Reinigungsflüssigkeit und eines Austriebs- und Spülgases, das durch Versorgungsleitungen (13, 17) der Verteilungsbaugruppe (10) zugeführt wird, in einen Satz von Düsen (8) sicherzustellen, der mit der Verteilungsbaugruppe (10) verbunden ist.

11. Vorrichtung nach Anspruch 10, **dadurch gekennzeichnet, dass** sie außerdem einen Behälter (12) zur Rückgewinnung eines Abstroms umfasst, der aus dem Reinigungsfluid, das Rückstände in Form von Mineralzusammensetzungen im gelösten Zustand oder in Suspension enthält, besteht, wobei der Rückgewinnungsbehälter (12) mit einer Vorrichtung (11) zur Rückgewinnung von Abströmen durch das Eingangsende (5a) des Partikelfilters (5) verbunden ist.

12. Vorrichtung nach Anspruch 10 oder 11, **dadurch gekennzeichnet, dass** sie außerdem einen Behälter (16) zur Versorgung mit Reinigungsflüssigkeit und eine Versorgungsvorrichtung (15) wie eine Pumpe oder ein Aufladegebläse für die Versorgung der Verteilungsbaugruppe (10) mit Reinigungsflüssigkeit wie Wasser umfasst.

13. Vorrichtung nach einem der Ansprüche 10 bis 12, **dadurch gekennzeichnet, dass** der Satz von Düsen (8) um eine zur Längsachse des Filters (5) im Wesentlichen parallele Achse drehbar montiert ist, um eine Spülung des Ausgangsendes (5b) des Partikelfilters (5) mit dem Reinigungsfluid auszuführen.

14. Verfahren nach Anspruch 1, in dem die in einem Verfahren nach einem der Ansprüche 1 bis 10 verwendete Reinigungsflüssigkeit am Eingangsende (5a) des Partikelfilters (5) zurückgewonnen wird und Rückstände, die aus Mineralzusammensetzungen bestehen, im gelösten Zustand oder in Suspension enthält, **dadurch gekennzeichnet, dass** der Abstrom mit Hilfe einer basenbildenden oder Pufferzusammensetzung mit neutralem oder leicht basischem pH-Wert neutralisiert wird, um die Mineralzusammensetzungen in Lösung im Abstrom ausfällen zu lassen, und eine Trennung der in Suspension befindlichen oder ausgefällten Mineralzusammensetzungen ausgeführt wird, um eine gereinigte flüssige Lösung zu erhalten.

15. Verfahren nach Anspruch 14, **dadurch gekennzeichnet, dass** die gereinigte flüssige Lösung eine wässerige Lösung oder Wasser ist und sie als Reinigungsflüssigkeit im Reinigungsverfahren gemäß einem der Ansprüche 1 bis 9 wiederverwendet wird.
